# EUROPÄISCHE PATENTSCHRIFT

(11) **EP 3 162 646 B1**
(45) Veröffentlichungstag und Bekanntmachung des Hinweises auf die Patenterteilung: **11.08.2021**
(21) Anmeldenummer: 16191290.2
(22) Anmeldetag: 29.09.2016
(51) Int. Cl.: B60T 11/12, B62L 3/02, B60T 11/224, B60T 15/38, B60L 3/08

(54) **BREMSSYSTEM, VERFAHREN ZUM BETREIBEN EINES BREMSSYSTEMS UND FAHRZEUG**
BRAKING SYSTEM, METHOD OF OPERATING A BRAKING SYSTEM AND VEHICLE
SYSTEME DE FREINAGE, PROCEDE A FAIRE FONCTIONNER UN SYSTEME DE FREINAGE ET VEHICULE

(30) Priorität: 14.10.2015 DE 102015219904
(43) Veröffentlichungstag der Anmeldung: 03.05.2017
(73) Patentinhaber: Robert Bosch GmbH, 70442 Stuttgart (DE)
(72) Erfinder: Moia, Alessandro, 71088 Holzgerlingen (DE)

(56) Entgegenhaltungen:
- EP-A2- 0 347 583
- WO-A1-2007/111510
- FR-A1- 2 964 073
- US-A1- 2002 162 715

## Beschreibung

### Stand der Technik

Die vorliegende Erfindung betrifft ein Bremssystem, ein Verfahren zum Betreiben eines Bremssystems sowie ein Fahrzeug. Die vorliegende Erfindung betrifft insbesondere ein Bremssystem eines mit Muskelkraft und/oder Motorkraft antreibbaren Fahrzeuges, insbesondere eines Elektrofahrrades, eBikes, Pedelecs oder dergleichen. Insbesondere betrifft die vorliegende Erfindung auch ein Verfahren zum Betreiben eines Bremssystems eines Fahrzeuges sowie ein mit Muskelkraft und/oder Motorkraft antreibbares Fahrzeug, insbesondere ein Elektrofahrrad, eBike, Pedelec oder dergleichen.

Bei verschiedenen mit Muskelkraft und/oder Motorkraft antreibbaren Fahrzeugen werden zunehmend hydraulische Bremssysteme im Zusammenhang mit Felgen- und/oder Scheibenbremsen eingesetzt. Derartige moderne hydraulisch betriebene und gesteuerte Bremssysteme ermöglichen die Erzeugung und Anwendung vergleichsweise hoher Bremskräfte, zum Beispiel auf ein abzubremsendes Rad eines Fahrzeuges. Auf Grund dieses Umstands besteht die Gefahr von Stürzen des Fahrers über den Lenker, wenn zu stark gebremst wird. Auch ein Blockieren und/oder ein Wegrutschen eines Rades, insbesondere des Vorderrades eines Fahrzeuges, kann bei übermäßigem Bremsen die Folge sein.

Da bei modernen Fahrrädern, insbesondere bei solchen mit einem elektrischen Zusatzantrieb, auch vergleichsweise hohe Durchschnittsgeschwindigkeiten erreicht werden, und zwar verglichen mit traditionellen Fahrrädern, steigen auch aus diesem Grund das Unfallrisiko und die Verletzungsgefahr, insbesondere dann, wenn eine präzise Regelung des Bremsdruckes und eine genaue Druckmodulation zum Verhindern einer Bremsblockade nicht möglich ist.

Bremssysteme für Fahrzeuge, bei denen Bremskraftverstärker verwendet werden, sind bereits aus den Schriften US 2002/0162715 A1, WO 2007/111510 A1 und EP 347 583 A2 bekannt, wobei diese Bremskraftverstärker beim Betrieb in einem Kraftfahrzeug vorgesehen sind. Ein Bremskraftverstärker, der auch bei einem Fahrrad vorgesehen sein kann, ist aus der WO 2007/111510 A1 bekannt.

Beim Betrieb bekannter Bremssysteme fließen die Kinetik und die Dynamik des Systems aus Fahrrad und Fahrer, zum Beispiel beim Verhindern eines Überschlags, nicht ein.

Ein weiterer Nachteil ist, dass viele Mittel zum Betreiben von Bremssystemen, zum Bespiel Aktuatoren, eine vergleichsweise hohe elektrische Leistungsaufnahme zeigen, so dass ein Einsatz bei Elektrofahrrädern wegen der oft begrenzten Leistungsfähigkeit der dort verwendeten Batterien und Akkumulatoren problematisch ist.

### Offenbarung der Erfindung

Das erfindungsgemäße Bremssystem mit den Merkmalen des Anspruchs 1 weist demgegenüber den Vorteil auf, dass mit besonders einfachen Mitteln und mit vergleichsweise geringerem Energieaufwand eine zuverlässige Regelung des Bremsdruckes mit einer Vermeidung von Gefahrensituationen für Fahrzeug und Fahrer durch Absenken des Risikos einer Bremsblockade oder eines Überschlags möglich ist. Dies wird erfindungsgemäß mit den Merkmalen des unabhängigen Anspruchs 1 erreicht.

Die Unteransprüche zeigen bevorzugte Weiterbildungen der Erfindung.

Ein besonders einfacher Aufbau für das erfindungsgemäße Bremssystem ergibt sich, wenn gemäß einer bevorzugten Ausführungsform die Ventilanordnung ein erstes Ventil aufweist, das erste Ventil steuerbar mindestens in einen ersten Zustand und in einen zweiten Zustand versetzbar ist, im ersten Zustand des ersten Ventiles die Niederdruckkammer und die Hochdruckkammer fluidmechanisch voneinander getrennt sind und im zweiten Zustand des ersten Ventiles die Niederdruckkammer und die Hochdruckkammer fluidmechanisch miteinander verbunden sind.

Der Aufbau des erfindungsgemäßen Bremssystems kann weiter vereinfacht werden, indem eine Umgehungsleitung oder Bypassleitung ausgebildet ist, welche ein erstes Ende in fluidmechanischer Verbindung mit der Niederdruckkammer und ein zweites Ende in fluidmechanischer Verbindung mit der Hochdruckkammer des Bremsverstärkers aufweist. In der Umgehungsleitung oder Bypassleitung ist das erste Ventil angeordnet, insbesondere zwischen den ersten und zweiten Enden.

Die Zuverlässigkeit des erfindungsgemäßen Bremssystems lässt sich weiter steigern, indem gemäß einer anderen Ausgestaltungsform die Ventilanordnung ein zweites Ventil aufweist, das zweite Ventil steuerbar mindestens in einen ersten Zustand und in einen zweiten Zustand versetzbar ist, im ersten Zustand des zweiten Ventiles die Niederdruckkammer fluidmechanisch mit einem Reservoir für das Bremsfluid verbunden ist und im zweiten Zustand des zweiten Ventiles die Niederdruckkammer fluidmechanisch vom Reservoir für das Bremsfluid getrennt ist.

Dabei ist es besonders vorteilhaft, wenn das zweite Ventil in Bezug auf eine fluidmechanische Anbindung des ersten Ventils an die Niederdruckkammer vorgeschaltet oder stromaufwärts gelegen angeordnet ist.

Grundsätzlich können das erste und das zweite Ventil der Ventilanordnung des erfindungsgemäßen Bremssystems jeweils einem beliebigen Betriebsschema folgen. Jedes Ventil kann mit einer diskrete Anzahl von Betriebszuständen oder auch mit kontinuierlich vielen Betriebszustände ausgebildet sein, um entweder diskrete Öffnungs- und Schließzustände oder ein kontinuierliches Öffnen und Schließen und somit Verbinden oder Trennen der Hochdruckkammer und der Niederdruckkammer zu bewirken.

Besonders einfache Verhältnisse stellen sich jedoch dann ein, wenn gemäß einer besonders bevorzugten Ausführungsform des erfindungsgemäßen Bremssystems das erste Ventil ein stromlos geschlossenes elektromagnetisches Bypassventil ist und/oder das zweite Ventil ein stromlos offenes elektromagnetisches Eingangsventil ist.

Ein besonders hoher Grad an Anpassungsfähigkeit und Flexibilität ergibt sich für das erfindungsgemäße Bremssystem dann, wenn dieses mit einer Steuereinheit ausgebildet ist, welche eingerichtet ist, in Abhängigkeit von einem Zustand des Fahrzeuges die Ventilanordnung zu steuern. Dabei wird insbesondere das erste Ventil und/oder das zweite Ventil zu veranlasst, den jeweiligen ersten oder zweiten Zustand einzunehmen, insbesondere um ein Blockieren, ein übermäßiges Verzögern, ein zu geringes Verzögern und/oder ein Rutschen eines oder mehrerer Räder des Fahrzeuges zu vermindern und/oder einen Überschlag des Fahrzeuges zu unterdrücken.

Gemäß einer anderen bevorzugten Ausführungsform des erfindungsgemäßen Bremssystems lässt sich ein hoher Grad an Flexibilität und Anpassung an jeweils vorliegenden Betriebszustände eines zu Grunde liegenden Fahrzeuges erreichen, wenn das Bremssystem mit einer Sensoranordnung in Verbindung mit der Steuereinheit ausgebildet ist, wobei die Sensoranordnung mindestens einen Sensor zum Erfassen von Werten einer Geschwindigkeit, Beschleunigung und/oder Neigung des Fahrzeuges, eines Druckes des Bremsfluides und/oder der Drehzahl eines oder mehrerer Räder des Fahrzeuges, wobei die Steuereinheit insbesondere ausgebildet ist, erfasste Werte des mindestens einen Sensors zu erhalten und daraus einen Zustand des Fahrzeuges zum Steuern der Ventilanordnung zu bestimmen.

Die Kernidee der vorliegenden Erfindung ermöglicht eine besonders kompakte Bauweise des Bremssystems, zum Beispiel indem der Bremsverstärker und/oder die Ventilanordnung an oder in einem Bremssattel oder als Teil eines Bremssattels ausgebildet ist oder sind.

Die vorliegende Erfindung betrifft auch ein Verfahren zum Betreiben eines Bremssystems eines Fahrzeuges. Bei diesem Verfahren werden in Abhängigkeit von einem Zustand des Fahrzeuges eine Niederdruckkammer und eine Hochdruckkammer eines Bremsverstärkers des Bremssystems fluidmechanisch miteinander verbunden oder fluidmechanisch voneinander getrennt.

Gemäß einem weiteren Aspekt der vorliegenden Erfindung wird ein mit Muskelkraft und/oder Motorkraft antreibbares Fahrzeug geschaffen, insbesondere ein Elektrofahrrad, ein eBike, Pedelec oder dergleichen. Das erfindungsgemäße Fahrzeug weist mindestens ein Rad und ein Bremssystem gemäß der vorliegenden Erfindung auf. Das Bremssystem ist zum gesteuerten Bremsen des mindestens einen Rades des Fahrzeuges ausgebildet.

### Kurzbeschreibung der Figuren

Unter Bezugnahme auf die beigefügten Figuren werden Ausführungsformen der Erfindung im Detail beschrieben.
- Figur 1: ist eine schematische Darstellung für ein Beispiel eines Fahrzeugs nach Art eines Elektrofahrrads, bei welchem eine erste Ausführungsform der Erfindung realisiert ist.
- Figur 2: ist eine schematische Ansicht, welche einen Bremsverstärker zeigt, welcher bei einem erfindungsgemäßen Bremssystem und einem erfindungsgemäßen Fahrzeug zum Einsatz kommen kann.
- Figur 3: ist eine schematische Darstellung nach Art eines Blockschaltbildes, welche eine Ausführungsform eines erfindungsgemäßen Bremssystems zeigt.
- Figuren 4, 5: zeigen in schematischer Seitenansicht Ausführungsformen des erfindungsgemäßen Fahrzeuges.

### Bevorzugte Ausführungsformen der Erfindung

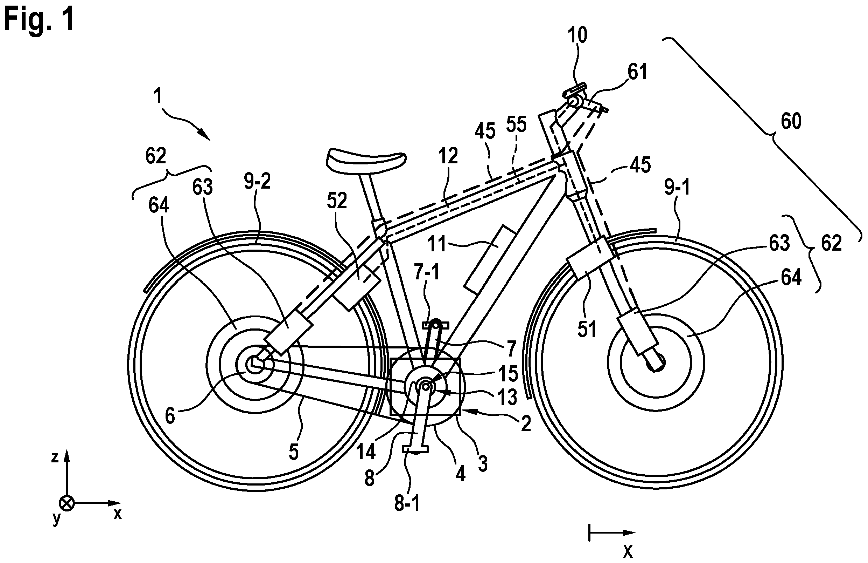

Nachfolgend werden unter Bezugnahme auf die Figuren 1 bis 5 Ausführungsbeispiele der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form von einander isoliert und beliebig miteinander kombiniert werden, ohne den Kern der Erfindung zu verlassen.

Zunächst wird unter Bezugnahme auf Figur 1 beispielhaft ein Elektrofahrrad als eine bevorzugte Ausführungsform des erfindungsgemäßen Fahrzeugs 1 im Detail beschrieben.

Das Fahrzeug 1 umfasst als Elektrofahrrad einen Rahmen 12, an dem ein Vorderrad 9-1, ein Hinterrad 9-2 und ein Kurbeltrieb 2 mit zwei Kurbeln 7, 8 mit Pedalen 7-1 und 8-1 angeordnet sind. Ein elektrischer Antrieb 3 ist vorgesehen und z.B. in den Kurbeltrieb 2 integriert. Am Hinterrad 9-2 ist ein Ritzel 6, ggf. als Teil einer Gangschaltung, angeordnet.

Ein Antriebsmoment, welches durch den Fahrer und/oder durch den elektrischen Antrieb 3 bereitgestellt wird, wird von einem Kettenblatt als Abtriebselement 4 am Kurbeltrieb 2 über eine Kette 5 auf ein Ritzel 6, z.B. als Teil einer Gangschaltung, übertragen.

Am Lenker des Fahrzeuges 1 ist eine Steuereinheit 10 angeordnet, welche mit dem elektrischen Antrieb 3 verbunden ist. Im oder am Rahmen 12 ist ferner eine Batterie 11 ausgebildet, welche zur Stromversorgung des elektrischen Antriebes 3 dient.

Im Rahmen 12 integriert ist ferner ein Kurbellager 13 oder Tretlager, welches ein Kurbelgehäuse 14 und eine Kurbelwelle 15 aufweist.

Das erfindungsgemäße Fahrzeug 1 gemäß Figur 1 weist darüber hinaus eine Ausführungsform des erfindungsgemäßen Bremssystems 100 auf.

Bei dieser Ausführungsform des erfindungsgemäßen Bremssystems 100 sind am Vorderrad 9-1 und am Hinterrad 9-2 des Fahrzeuges 1 jeweils Bremseinheiten 62 mit einer Bremsscheibe 64 und einem Bremssattel 63 ausgebildet. Der Bremssattel 63 weist jeweils entsprechende Eingriffselemente zum Reibschluss mit der Bremsscheibe 64 auf. Dabei kann es sich um Bremsbeläge oder Bremsbacken handeln; diese sind in Figur 1 nicht im Detail dargestellt.

Der Bremssattel 63 wird jeweils über eine Bremsleitung 45 ausgehend vom Aktuator 61 und dem dort vorgesehenen Bremshebel 61-1 gesteuert mit einem Bremsfluid beaufschlagt, um in gesteuerter Art und Weise mittels des Bremssattels 63 über Reibschluss eine Kraft auf die jeweilige Bremsscheibe 64 auszuüben und eine Drehung des jeweiligen Rade 9-1, 9-2 zu beschränken oder zu unterdrücken.

Das in Figur 1 dargestellte Fahrzeug 1 weist für jedes der Räder 9-1 und 9-2 eine eigene Bremse 60 aus Bremseinheit 62 und Aktuator 61 auf. Es kann auch ein einzelner Aktuator 61 vorgesehen sein, über welchen beide Bremseinheiten 62 der Bremsen 60 gemeinsam betätigt werden.

Um erfindungsgemäß die Betriebssicherheit zu erhöhen und die Unfallgefahr beim Betreiben des Bremssystems 100 zu reduzieren, ist das erfindungsgemäße Fahrzeug 1 aus Figur 1 mit einer Sensoranordnung 50 ausgebildet. Diese weist einen ersten Sensor 51, der im Bereich des Vorderrades 9-1 angebracht ist, und einen zweiten Sensor 52 auf, der im Bereich des Hinterrades 9-2 angebracht ist. Es kann sich dabei um Drehzahlsensoren handeln, die zum Beispiel im Zusammenhang mit der Steuereinheit 10 die Funktionalität eines ABS-Systems, eines EPS-Systems oder anderer Fahrassistenzkomponenten realisieren. Dazu sind die Sensoren 51 und 52 über Steuer- und Messleitungen 55 mit der Steuereinheit 10 verbunden.

Alternativ oder zusätzlich zu Raddrehzahlwerten können ein oder mehrere der Sensoren 51 und 52 auch andere physikalische und den Zustand des Fahrzeuges 1 beschreibende Größen erfassen, zum Beispiel eine Fahrzeugorientierung und/oder -neigung, eine Beschleunigung, sowie Umweltparameter wie Feuchtigkeit, Temperatur und dergleichen und/oder den Messgrößen, die den Betriebszustand des Bremssystems 100 betreffen, z.B. den Grad der Betätigung des Bremshebels 61-1, den Druck des Bremsfluides oder dergleichen.

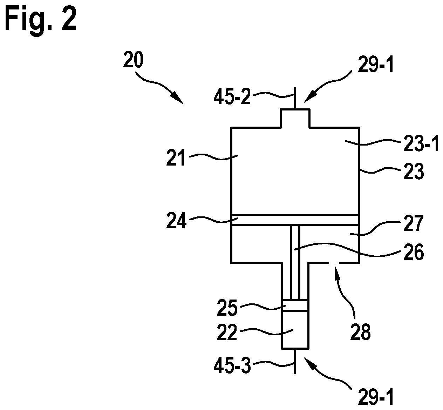

Figur 2 zeigt eine schematische Seitenansicht einer Ausführungsform eines Bremsverstärkers 20, wie er bei einer Ausführungsform des erfindungsgemäßen Bremssystems 100 verwendet werden kann.

Der Bremsverstärker 20 besteht dem Kern nach aus einem Gehäuse 23, dessen Inneres 23-1 über einen ersten Kolben 24, einen zweiten Kolben 25 und ein die ersten und zweiten Kolben verbindendes Element 26, zum Beispiel in Form einer Stange, in eine erste oder Niederdruckkammer 21 und in eine zweite oder Hochdruckkammer 22 unterteilt ist.

Die Niederdruckkammer 21 des Bremsverstärkers 20 befindet sich auf einer Eingangsseite und weist dort eine Zuführ- oder Eingangsöffnung 29-1 auf, an welche ein Abschnitt 45-2 der Bremsleitung 45 ausgebildet ist, um die Niederdruckkammer 21 mit einem Bremsfluid definierten Druckes zu beaufschlagen.

Über die gekoppelten ersten und zweiten Kolben 24 und 25 und die entsprechenden Querschnittsflächen der Niederdruckkammer 21 und der Hochdruckkammer 22 und der ersten und zweiten Kolben 24 und 25 findet eine Druckverstärkung von der Niederdruckkammer 21 zur Hochdruckkammer 22 hin statt.

Auf der dem Eingangsanschluss 29-1 der Niederdruckkammer 21 abgewandten Seite des Bremsverstärkers 20 ist ein Ausgangsanschluss 29-2 in Verbindung mit einem weiteren Abschnitt 45-3 der Bremsleitung 45 ausgebildet. Dieser Abschnitt 45-3 der Bremsleitung 45 führt zu einer Bremseinheit 62 gemäß Figur 1 zur Druckbeaufschlagung eines Bremssattels 63 und zur Ausbildung eines definierten Reibschlusses mit der Bremsscheibe 64.

Auf der rückwärtigen Seite zwischen dem ersten Kolben 24 und dem zweiten Kolben 25 ist im Gehäuse 23, also auf der der Niederdruckkammer 21 abgewandten Seite des Kolbens 24, eine Luftkammer 27 ausgebildet, die der Druckentlastung des Bremsverstärkers 20 dient und dazu über eine Öffnung 28 nach außen hin geöffnet ist, so dass beim Verschieben der Anordnung aus erstem und zweitem Kolben 24, 25 - in Figur 2 nach unten hin, also in Richtung auf die Hochdruckseite des Bremsverstärkers 20 - die in der Luftkammer 27 verdrängte Luft durch die Öffnung 28 entweichen kann und die Kolbenbewegung im Bremsverstärker 20 nicht behindert.

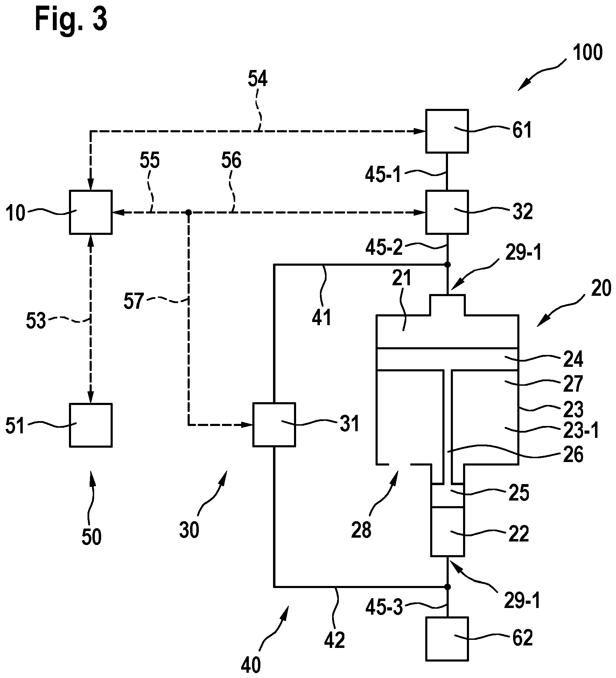

Figur 3 zeigt eine Ausführungsform des erfindungsgemäßen Bremssystems 100 unter Verwendung eines Bremsverstärkers 20 mit ähnlicher Struktur wie derjenigen, die in Figur 2 dargestellt ist.

Dabei ist der Bremsverstärker 20 in der Bremsleitung 45 angeordnet, indem zweite und dritte Abschnitte 45-2 und 45-3 der Bremsleitung 45 an den Eingangsanschluss 29-1 beziehungsweise den Ausgangsanschluss 29-2 des Gehäuses 23 des Bremsverstärkers 20 angeschlossen sind, um die Niederdruckkammer 21 und die Hochdruckkammer 22 des Bremsverstärkers 20 fluidmechanisch mit der Bremsleitung 45 zu verbinden.

Die Bremsleitung 45 weist des Weiteren einen ersten Abschnitt 45-1 auf. Dieser erste Abschnitt 45-1 der Bremsleitung 45 ist mit einem Aktuator 61 der Bremse 60 fluidmechanisch verbunden. Auf Betreiben des Aktuators 61, z.B. mittels eines Bremshebels 61-1 wird in der Bremsleitung 45 im Bremsfluid Druck aufgebaut, welcher über die fluidmechanische Kopplung innerhalb des gesamten Systems der Bremsleitung 45 mit den ersten bis dritten Abschnitten 45-1, 45-2 und 45-3 übertragen wird, um in der Bremseinheit 62 den Bremssattel 63 gesteuert gegenüber der Bremsscheibe 64 zu betätigen.

Figur 3 zeigt des Weiteren eine Ventilanordnung 30. Diese besteht aus einem ersten Ventil 31 nach Art eines Ausgangs-, Umgehungs- oder Bypassventiles und einem zweiten Ventil 32 nach Art eines Eingangsventils.

Das erste Ventil 31 als Bypassventil ist über eine Umgehungsleitung 40, die auch als Bypassleitung bezeichnet werden kann, fluidmechanisch zwischen der Hochdruckkammer 22 und der Niederdruckkammer 21 des Bremsverstärkers 20 geschaltet. Das bedeutet, dass ein erstes Ende oder eine erster Abschnitt 41 der Umgehungsleitung 40 eine Seite des ersten Ventiles 31 mit der Niederdruckkammer 21 des Bremsverstärkers 20 verbindet und dass ein zweites Ende oder ein zweiter Abschnitt 42 der Umgehungsleitung 40 die andere Seite des ersten Ventils 31 mit der Hochdruckkammer 22 des Bremsverstärkers 20 verbindet.

Diese fluidmechanische Verbindung kann direkt erfolgen, indem nämlich die ersten und zweiten Enden oder Abschnitte 41 bzw. 42 der Umgehungsleitung 40 direkt mit der Niederdruckkammer 21 beziehungsweise der Hochdruckkammer 22 verbunden sind.

In Figur 3 ist jedoch eine mittelbare Verbindung mit der Niederdruckkammer 21 und der Hochdruckkammer 22 des Bremsverstärkers 20 dargestellt, nämlich über eine fluidmechanische Anbindung an die zweiten und dritten Abschnitte 45-2 bzw. 45-3 der Bremsleitung 45.

Das zweite Ventil 32 der Ventilanordnung 30 ist als Eingangsventil zwischen den ersten und zweiten Abschnitten 45-1 und 45-2 der Bremsleitung 45 und somit stromaufwärts zum Eingangsanschlusses 29-1 des Bremsverstärkers 20 und der Verbindung zwischen erstem Ende 41 der Umgehungsleitung 40 und der Bremsleitung 45 angeordnet, um in gesteuerter Art und Weise den Zugang des Bremsfluides und somit die Druckbeaufschlagung auf der stromabwärts gelegenen Seite des zweiten Ventiles 32 zu steuern.

Das erste Ventil 31 der Ventilanordnung 30 ist dazu ausgebildet, als Bypassventil im Zusammenwirken mit der Umgehungsleitung 40 und den ersten und zweiten Abschnitten 41 und 42 davon in gesteuerter Art und Weise eine direkte fluidmechanische Verbindung zwischen der Hochdruckkammer 22 und der Niederdruckkammer 21 auszubilden oder zu unterbinden. Auf diese Art und Weise ist es möglich, einen Druckausgleich zwischen der Hochdruckkammer 22 und der Niederdruckkammer 21 herzustellen.

Dies bewirkt in Folge, dass ein aufgebauter höherer Druck in der Hochdruckkammer 22 und im dritten Abschnitt 45-3 der Bremsleitung 45 beim Öffnen des ersten Ventiles 31 als Bypassventil absinkt. Das bedeutet, dass ohne die Notwendigkeit eines Druckreservoirs oder eines Reservoirs für Bremsfluid und allein durch Verbinden der Hochdruckkammer 22 mit der Niederdruckkammer 21 ein Druckabfall im stromabwärtigen Bereich der Hochdruckkammer 22 erzielbar ist. Auf diese Art und Weise ist es möglich, ein von einem Benutzer bewirktes übermäßiges Bremsen zu verhindern oder zu beenden. Dies ermöglicht in Abhängigkeit vom Fahrzeugzustand die Verringerung eines Risikos des Blockierens und/oder Schlupfes eines Rades und einer Unfallgefahr durch einen Sturz über den Lenker.

Zur Bestimmung des Fahrzeugzustandes ist eine Sensoranordnung 50 mit einem oder mehreren Sensoren 51, 52 vorgesehen. In der Anordnung gemäß Figur 3 weist die Sensoreinrichtung 50 stellvertretend nur einen einzelnen Sensor 51 auf. Es können jedoch mehrere Sensoren vorgesehen sein, wie dies im Zusammenhang mit Figur 1 dargestellt ist.

Die Sensoranordnung 50 und der oder die Sensoren 51 sind über eine Mess- und Steuerleitung 53 mit der Steuereinheit 10 verbunden. Auf diese Art und Weise kann die Steuereinheit 10 von dem oder den Sensoren 51 der Sensoranordnung 50 erfasste Werte bestimmter Messgrößen aufnehmen und einer bewertenden Verarbeitung zuführen. Auf der Grundlage eines Verarbeitungsergebnisses kann dann über die Mess- und Steuerleitungen 55, 56 und 57 der Betrieb der ersten und zweiten Ventile 31 und 32 der Ventilanordnung 30 gesteuert werden. Dabei können auch noch über die Mess- und Steuerleitung 54 erfasste Parameter z.B. im Zusammenhang mit den Aktuator 61 einfließen.

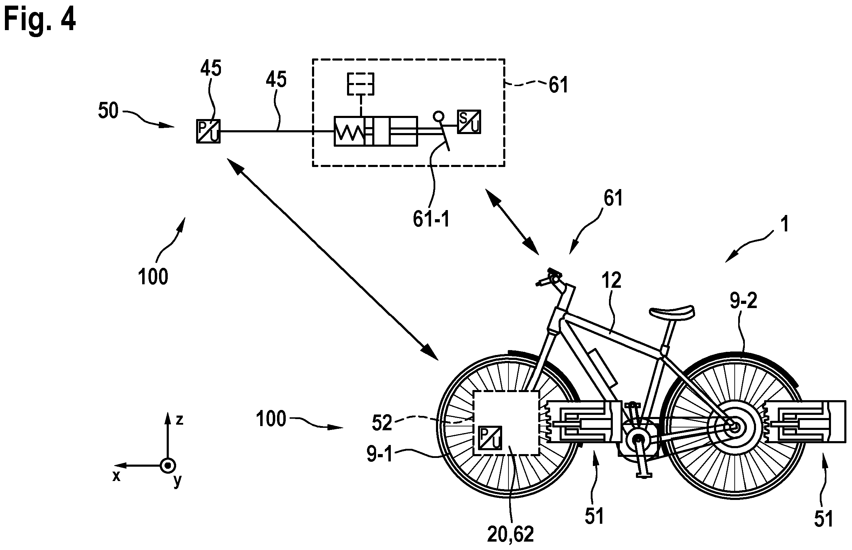

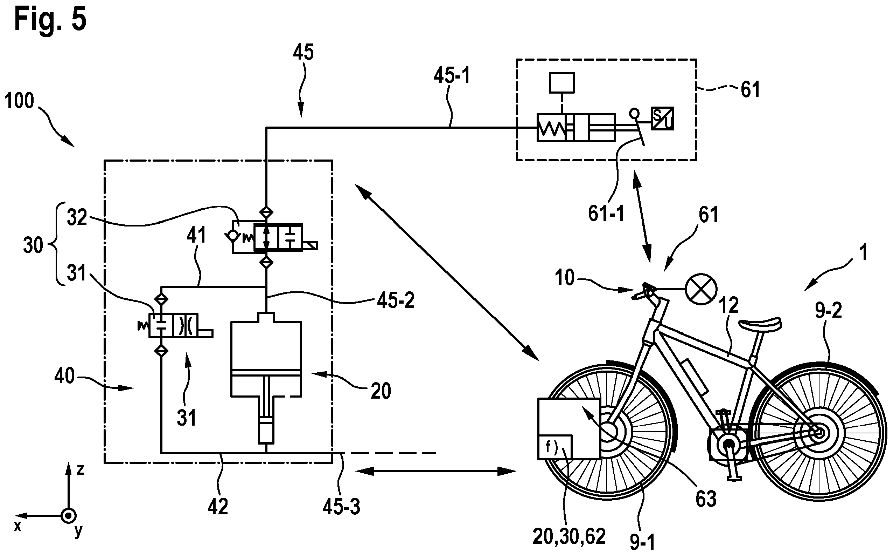

Die Figuren 4 und 5 zeigen andere Ausführungsformen erfindungsgemäßer Fahrzeuge 1 unter Verwendung eines erfindungsgemäßen Bremssystems 100.

Dabei ist jeweils Kernidee, dass über entsprechende Sensoren 51, 52 einer Sensoranordnung 50 der Zustand des Fahrzeuges 1 gerade im Hinblick auf die Betätigung des Aktuators 61 der Bremse 60 über den Bremshebel 61-1 überprüft werden kann. In Abhängigkeit von einem Bewertungsschema wird dann ermittelt, ob und wie die ersten und zweiten Ventile 31 und 32 der Bremsanordnung 30 zu betätigen sind, um eine Risikosituation auf Grund eines vom Fahrer über den Aktuator 61 und den Bremshebel 61-1 angeforderten Bremsverhaltens zu abzuwenden.

Diese und weitere Merkmale und Eigenschaften der vorliegenden Erfindung werden an Hand der folgenden Darlegungen weiter erläutert:
Bei modernen Fahrrädern, eBikes, Pedelecs und dergleichen können auch hydraulische Felgen- und Scheibenbremsen Fahrräder zum Einsatz kommen. Diese erlauben es dem Fahrer, höhere Bremsmomente zu aktuieren. Das kann zu Gefahrensituationen und zu Stürzen über den Lenker und/oder zu Stürzen auf Grund eines blockierenden und/oder wegrutschenden Vorderrades führen.

Zusätzlich wird bei modernen Fahrrädern mit elektrischem Zusatzantrieb eine höhere Durchschnittsgeschwindigkeit erreicht als bei traditionellen Fahrrädern. Auch dadurch steigen sowohl das Unfallrisiko als auch bei einem Unfall der Verletzungsgrad der Verkehrsteilnehmer.

Bei Fahrrädern sind sowohl steuernde als auch regelnde Bremssysteme denkbar.
Momentan gibt es aber keine geregelten oder steuernden Bremssysteme für Fahrräder und dergleichen, die bei einfachem Aufbau und geringem Energiebedarf zuverlässig sind und das Unfallrisiko senken oder vermeiden.

Bei Elektrofahrrädern, eBikes, Pedelecs und dergleichen steht nun eine elektrische Energiequelle zur Verfügung, welche die Installation eines elektrohydraulischen Bremssystems ermöglicht.

Die vorliegende Erfindung schafft unter anderem zwei Konzepte für ein Bremssystem für Elektrofahrräder, eBikes, Pedelecs und dergleichen, durch welche die Mängel bei den oben beschriebenen Möglichkeiten des regeln und Steuerns behoben werden.

Das vorgestellte erfindungsgemäße Prinzip hat folgende Funktionskonzepte und Vorteile:

### (1) Blockierverhinderer:

- Feine Regelung des Bremsdrucks: Verbesserung gegenüber s1.
- Neutrales Verhalten beim Stromausfall: Versbesserung gegenüber r3.
- Möglicher Druckabbau durch Aktuierung von Ventilen und nicht durch Elektromotor: Vorteil gegenüber r3.

### (2) Überschlagverhinderer

- Dynamik des Systems aus Fahrrad und Fahrer wird berücksichtigt. Dadurch wird eine robuste und zuverlässige Funktionalität realisierbar.
- Neutrales Verhalten beim Stromausfall: Versbesserung gegenüber r3.
- Mögliche Druckabbau durch Aktuierung von Ventilen und nicht durch Elektromotor: Vorteil gegenüber r3.

Ein zusätzlicher Vorteil der Erfindung gegenüber allen bisherigen Lösungen ist, dass die zusätzlichen Komponenten zur Erweiterung einer Bremsanlage mit hydraulischer Kraftübersetzung zu einem regelnden Bremssystem aus nur zwei Ventilen und deren Steuerung bestehen. Diese Komponente könnten z.B. direkt im Bremssattel integriert werden und führen zu einer Platz sparende Lösung.

Figur 4 zeigt die allgemeinen Sensoren, die am erfindungsgemäßen Fahrzeug 1 im Zusammenhang mit einem erfindungsgemäßen Bremssystem 100 montierbar und verwendbar sind.

Denkbar ist die Verwendung eines Drucksensors, der in Figur 4 durch den Sensor 52 dargestellt ist. Dieser kann integriert sein in die Bremseinheit 62 und dort z.B. in den Bremssattel 63. Er kann alternativ auch extern und außerhalb ausgebildet sein. Es besteht keine Notwendigkeit für die Implementierung der erfindungsgemäßen Funktionalitäten, einen Drucksensor einzusetzen. Jedoch ist dieser von Vorteil in der Abbildung der Bremsdynamik und der Stellgenauigkeit des Bremssystems 100.

Denkbar sind ferner Drehzahlsensoren. Diese sind in Figur 4 durch die Sensoren 51 gegeben und liefern die Geschwindigkeiten der Räder 9-1 und 9-2. Sie sind wichtig, um die Funktion als Blockierverhinderer und/oder Überschlagverhinderer zu implementieren.

Auch kann an einen Sensor für die Drehrate und/oder für die Beschleunigung gedacht werden. Es besteht keine Notwendigkeit, für die Implementierung der erfindungsgemäßen Funktionalitäten diese Sensoren einzusetzen, jedoch sind sie von Vorteil in der Abbildung der Fahrraddynamik und für die Robustheit der Funktion als Blockierverhinderer und/oder Überschlagverhinderer.

Im Folgenden wird weiter auf die Funktionsweise des Bremssystems 100 eingegangen. Figur 5 zeigt den Aufbau einer anderen Ausführungsform des erfindungsgemäßen Bremssystems 100.

Das Bremssystem 100 besteht aus einem ersten Ventil 31 als Auslassventil oder Bypassventil, einem zweiten Ventil 32 als Einlassventil, einem Bremsverstärker 20 und einem Steuergerät, welches in der Steuereinheit 10 integriert ist oder von dieser gebildet wird.

Das Steuergerät kann also mit anderen Funktionen der Steuereinheit 10 geteilt werden. Im Fall eines eBikes kann die Steuereinheit 10 zur Steuerung des elektrischen Antriebes 3 und zur Regelung des Bremssystems 100 eingesetzt werden.

Die Steuereinheit 10 nimmt die Signale ggf. vorgesehener Sensoren 51, 52 auf und steuert die ersten und zweiten Ventile 31, 32 der Ventilanordnung 30, also sowohl das Einlassventil als auch das Auslassventil.

Das Bremssystem 100 ist hier nur für das Vorderrad 9-1 dargestellt. Es kann erweitert und auch für das Hinterrad 9-2 implementiert werden.

Figuren 2 und 3 zeigen detaillierte Darstellungen des Bremsverstärkers 20. Dieser besteht aus einer Niederdruckkammer 21, aus einem ersten Kolben 24, der von der Bremsflüssigkeit in der Niederdruckkammer 21 durch Verdrängung antreibbar ist, aus einer Stange als Kopplung 26, die den ersten Kolben 24 mit einem zweiten Kolben 25 fest verbindet, und aus einer Hochdruckammer 22, deren Flüssigkeit vom zweiten Kolben 25 durch Verdrängung bewegt werden kann.

Der Bereich zwischen den zwei Kolben 24 und 25 ist eine Luftkammer 27 enthält Luft. Bei der Bewegung der Kolben 24, 25 verändert sich das Volumen von der Luftkammer 27. Um zu vermeiden dass die Veränderung des Volumens gegen die Bewegung der Kolben 24, 25 wirkt, ist eine Öffnung 28 für den Luftvolumenausgleich ausgebildet.

### (1) Normaler Bremsvorgang

Während eines normalen Bremsvorganges sind die Ventile 31, 32 nicht bestromt. Das erste Ventil 31 ist als Bypassventil geschlossen. Das zweite Ventil 32 ist als Einlassventil offen.

Wenn der Fahrer den Bremshebel 61-1 des Aktuator 61 betätigt, wird die Bremsflüssigkeit durch die 45 bis zum Bremsverstärker 20 bewegt und dadurch zu den Bremsbelägen im Bremssattel 63.

Wenn der Fahrer den Bremshebel 61-1 des Aktuator 61 loslässt, kann die Bremsflüssigkeit vom Bremssattel 63 zurück zum Bespiel zu einem Reservoir 61-2 im Bereich des Bremshebels 61-1 fließen. Der Bremsdruck und damit das Bremsmoment sinken. Im Bremshebel 61-1 ist eine Feder ausgebildet, welche den Hebel 61-1 zurück zur Nullposition bringt.

### (2) Überschlagsverhinderer

Wenn das Bremsmoment einen gewissen Wert überschreitet und die Reibung zwischen Reifen und Straße hoch genug ist, dann kann das Fahrrad zu einem Überschlag kommen, was den Fahrer zu einem Stürz über den Lenker führen kann.

Um das zu vermeiden, muss das Bremssystem 100 das Bremsmoment und dafür den Bremsdruck an den Bremsbelägen im Bremssattel 63 regeln.

Um den Bremsdruck zu begrenzen wird die Steuereinheit das zweite Ventil 32 als Einlassventil schließen. Dadurch ist der Fahrer nicht mehr in der Lage, den Bremsdruck in der Bremsleitung 45 zu erhöhen.

Wenn trotz dieser Maßnahme, das System aus Fahrrad und Fahrer eine Überschlagtendenz zeigen sollte, muss der Bremsdruck in dem Anschluss zu den Bremsbelägen im Bremssattel 63 abgebaut werden.

Um einen Druckabbau zu erreichen wird das erste Ventil 31 als Auslass-, oder Bypass- oder Umgehungsventil bestromt und damit geöffnet, um den mit niedrigerem Druck versehenen Abschnitt 45-2 der Bremsleitung 45 mit dem Abschnitt 45-3 der Bremsleitung 45 mit höherem Druck im Anschluss zu den Bremsbelägen im Bremssattel 63 zu verbinden. Dadurch wird die Bremsflüssigkeit von der Hochdruckkammer zur Niedrigdruckkammer des Bremsverstärkers fließen und den Bremsdruck an den Bremsbelägen im Bremssattel 63 reduzieren.

Wenn der Fahrer während dieses Vorganges den Hebel 61-1 loslässt, kann die Bremsflüssigkeit über ein Rückschlagventil im Bereich des zweiten Ventiles 32 als Einlassventil vom Bremssattel 63 zurück in den Speicher im Bereich des Bremshebel 61-1 fließen. So kann der Fahrer den Bremsvorgang jederzeit unterbrechen.

### (3) Blockierverhinderer

Wenn der Bremsdruck einen gewissen Wert überschreitet und die Reibung zwischen Straße und Reifen nicht hoch genug ist, um einen Überschlag zu verursachen, kann das gebremste Rad 9-1, 9-2 zum Blockieren neigen. Dadurch verliert das Rad 9-1, 9-2 Seitenkräfte, kann seitlich rutschen und zu einem Sturz des Fahrers führen.

Um den Sturz zu vermeiden darf der Radschlupft nicht zu hoch sein, um die Seitenkräfte zu behalten, und nicht zu niedrig, um genug Verzögerung sicherzustellen. Abhängig von Untergrund und Reifen gibt es optimale Schlupfwerten, das Bremssystem 100 muss den Schlupf zu diesem optimalen Wert regeln.

Um den Schlupf zu regeln, muss das Bremssystem 100 den Schlupf schätzen, z.B. anhand der Fahrzeuggeschwindigkeit und der Radgeschwindigkeit, und den Bremsdruck am Anschluss zu den Bremsbelägen im Bremssattel 63 modulieren:
Wenn der Schlupf zu hoch ist, muss der Bremsdruck abgebaut werden. Wenn der Schlupf zu niedrig ist, muss der Druck wieder aufgebaut werden.

Um den Druck abzubauen, wird das zweite Ventil 32 als Einlassventil bestromt und damit geschlossen. Der Fahrer kann dann den Druck an dem Anschluss zu den Bremsbelägen im Bremssattel nicht weiter erhöhen. Auch das erste Ventil 31 als Bypass- oder Auslassventil wird bestromt und damit geöffnet. Es werden der Abschnitt 45-2 der Bremsleitung 45 mit niedrigerem Druck und der Abschnitt 45-3 der Bremsleitung 45 mit höherem Druck im Anschluss zu den Bremsbelägen im Bremssattel 63 verbunden. Dadurch wird die Bremsflüssigkeit von der Hochdruckkammer 22 des Bremsverstärkers zu der Niedrigdruckkammer 21 des Bremsverstärkers 20 fließen und dadurch den Bremsdruck an den Bremsbelägen im Bremssattel 63 reduziert.

Um den Druck zu halten, wird das erste Ventil 31 nicht mehr bestromt und damit geschlossen.

Um den Druck wieder aufzubauen, wird das zweite Ventil 32 nicht mehr bestromt und damit geöffnet, so dass der Fahrer wieder Bremsflüssigkeit über Bremshebel 61-1 durch die Bremsleitung 45 zum Bremssattel 63 fördern kann.

Wenn der Fahrer während dieses Vorganges den Hebel 61-1 loslässt, kann die Bremsflüssigkeit über ein Rückschlagventil im Bereich des zweiten Ventiles 32 als Einlassventil vom Bremssattel 63 zurück in einen Speicher im Bereich des Bremshebels fließen. Auf diese Weise kann der Fahrer den Bremsvorgang jederzeit unterbrechen.

### (4) Verhalten bei Stromausfall oder im Fehlerfall

Ein weiterer Vorteil des erfindungsgemäßen Bremssystems ist dessen neutrales Verhalten im Fehlerfall.

Sollte ein Fehler auftreten oder die Energieversorgung ausfallen, werden beide Ventile 31 und 32 der Ventilanordnung 30 nicht mehr bestromt. Damit ist sichergestellt, dass dem Fahrer die normale Funktion der Bremsen zur Verfügung steht.

## Patentansprüche

1. Bremssystem (100) eines mit Muskelkraft und/oder Motorkraft antreibbaren Fahrzeuges (1), insbesondere eines Elektrofahrrades, eBikes, Pedelecs oder dergleichen,
mit:
- einem Bremsverstärker (20) und
- einer Ventilanordnung (30),
wobei:
- der Bremsverstärker (20) zur Beaufschlagung mit einem Bremsfluid ausgebildet ist und eine eingangsseitige Niederdruckkammer (21) und eine ausgangsseitige Hochdruckkammer (22) aufweist und
- durch die Ventilanordnung (30) die Niederdruckkammer (21) und die Hochdruckkammer (22) steuerbar fluidmechanisch verbindbar sind,
**dadurch gekennzeichnet, dass**
der Bremsverstärker (20) und/oder die Ventilanordnung (30) an oder in einem Bremssattel (63) oder als Teil eines Bremssattels (63) ausgebildet sind.

2. Bremssystem (100) nach Anspruch 1,
bei welchem:
- die Ventilanordnung (30) ein erstes Ventil (31) aufweist,
- das erste Ventil (31) steuerbar mindestens in einen ersten Zustand und in einen zweiten Zustand versetzbar ist,
- im ersten Zustand des ersten Ventiles (31) die Niederdruckkammer (21) und die Hochdruckkammer (22) fluidmechanisch voneinander getrennt sind und
- im zweiten Zustand des ersten Ventiles (31) die Niederdruckkammer (21) und die Hochdruckkammer (22) fluidmechanisch miteinander verbunden sind.

3. Bremssystem (100) nach Anspruch 2,
mit einer Umgehungsleitung (40),
- welche ein erstes Ende (41) in fluidmechanischer Verbindung mit der Niederdruckkammer (21) und ein zweites Ende (42) in fluidmechanischer Verbindung mit der Hochdruckkammer (22) aufweist und
- in welcher das erste Ventil (31), insbesondere zwischen den ersten und zweiten Enden (41, 42), angeordnet ist.

4. Bremssystem (100) nach einem der vorhergehenden Ansprüche,
bei welchem:
- die Ventilanordnung (30) ein zweites Ventil (32) aufweist,
- das zweite Ventil (32) steuerbar mindestens in einen ersten Zustand und in einen zweiten Zustand versetzbar ist,
- im ersten Zustand des zweiten Ventiles (32) die Niederdruckkammer (21) fluidmechanisch mit einem Reservoir (61-2) für das Bremsfluid verbunden ist und
- im zweiten Zustand des zweiten Ventiles (32) die Niederdruckkammer (21) fluidmechanisch vom Reservoir (61-2) für das Bremsfluid getrennt ist.

5. Bremssystem (100) nach einem der vorangehenden Ansprüche,
bei welchem das zweite Ventil (32) in Bezug auf eine fluidmechanische Anbindung des ersten Ventils (31) an die Niederdruckkammer (21) stromaufwärts angeordnet ist.

6. Bremssystem (100) nach einem der vorangehenden Ansprüche,
bei welchem:
- das erste Ventil (31) ein stromlos geschlossenes elektromagnetisches Bypassventil ist und/oder
- das zweite Ventil (31) ein stromlos offenes elektromagnetisches Eingangsventil ist.

7. Bremssystem (100) nach einem der vorangehenden Ansprüche,
- mit einer Steuereinheit (10), welche eingerichtet ist, in Abhängigkeit von einem Zustand des Fahrzeuges (1) die Ventilanordnung (30) zu steuern und insbesondere das erste Ventil (31) und/oder das zweite Ventil (32) zu veranlassen, den jeweiligen ersten oder zweiten Zustand einzunehmen,
- insbesondere um ein Blockieren, ein übermäßiges Verzögern, ein zu geringes Verzögern und/oder ein Rutschen eines oder mehrerer Räder (9-1, 9-2) des Fahrzeuges (1) zu vermindern und/oder einen Überschlag des Fahrzeuges (1) zu unterdrücken.

8. Bremssystem (100) nach Anspruch 7,
- mit einer Sensoranordnung (50) in Verbindung mit der Steuereinheit (10) mit mindestens einem Sensor (51, 52) zum Erfassen von Werten einer Geschwindigkeit, Beschleunigung und/oder Neigung des Fahrzeuges (1), eines Druckes des Bremsfluides und/oder der Drehzahl eines oder mehrerer Räder (9-1, 9-2) des Fahrzeuges (1),
- wobei die Steuereinheit (10) ausgebildet ist, erfasste Werte des mindestens einen Sensors (51, 52) zu erhalten und daraus einen Zustand des Fahrzeuges (1) zum Steuern der Ventilanordnung (30) zu bestimmen.

9. Verfahren zum Betreiben eines Bremssystems (100) eines Fahrzeuges (1) nach einem der Ansprüche 1 bis 8,
bei welchem gesteuert in Abhängigkeit von einem Zustand des Fahrzeuges (1) eine Niederdruckkammer (21) und eine Hochdruckkammer (22) eines Bremsverstärkers (20) des Bremssystems (100) fluidmechanisch miteinander verbunden oder fluidmechanisch voneinander getrennt werden.

10. Mit Muskelkraft und/oder Motorkraft antreibbares Fahrzeug (1), insbesondere Elektrofahrrad, eBike, Pedelec oder dergleichen,
mit:
- mindestens einem Rad (9-1, 9-2) und
- mit einem Bremssystem (100) nach einem der Ansprüche 1 bis 8, wobei der Bremsverstärker (20) und/oder die Ventilanordnung (30) an oder in einem Bremssattel (63) oder als Teil eines Bremssattels (63) ausgebildet sind und
wobei das Bremssystem (100) zum gesteuerten Bremsen des mindestens einen Rades (9-1, 9-2) ausgebildet ist.

## Claims

1. Brake system (100) of a vehicle (1) which can be driven by way of muscle power and/or motor power, in particular of an electric bicycle, e-bike, pedelec or the like,
with:
- a brake booster (20), and
- a valve arrangement (30):
- the brake booster (20) being configured for loading with a brake fluid, and having an input-side low pressure chamber (21) and an output-side high pressure chamber (22), and
- it being possible for the low pressure chamber (21) and the high pressure chamber (22) to be connected in a controllably fluid-mechanical manner by way of the valve arrangement (30),
**characterized in that**
the brake booster (20) and/or the valve arrangement (30) are/is configured on or in a brake calliper (63) or as part of a brake calliper (63).

2. Brake system (100) according to Claim 1,
in the case of which:
- the valve arrangement (30) has a first valve (31),
- the first valve (31) can be set controllably at least into a first state and into a second state,
- the low pressure chamber (21) and the high pressure chamber (22) are disconnected from one another in a fluid-mechanical manner in the first state of the first valve (31), and
- the low pressure chamber (21) and the high pressure chamber (22) are connected to one another in a fluid-mechanical manner in the second state of the first valve (31).

3. Brake system (100) according to Claim 2,
with a bypass line (40)
- which has a first end (41) in a fluid-mechanical connection to the low pressure chamber (21) and a second end (42) in a fluid-mechanical connection to the high pressure chamber (22), and
- in which bypass line (40) the first valve (31) is arranged, in particular between the first and second ends (41, 42).

4. Brake system (100) according to one of the preceding claims, in the case of which:
- the valve arrangement (30) has a second valve (32),
- the second valve (32) can be set controllably at least into a first state and into a second state,
- the low pressure chamber (21) is connected in a fluid-mechanical manner to a reservoir (61-2) for the brake fluid in the first state of the second valve (32), and
- the low pressure chamber (21) is disconnected in a fluid-mechanical manner from the reservoir (61-2) for the brake fluid in the second state of the second valve (32).

5. Brake system (100) according to one of the preceding claims,
in the case of which the second valve (32) is arranged upstream in relation to a fluid-mechanical attachment of the first valve (31) to the low pressure chamber (21).

6. Brake system (100) according to one of the preceding claims,
in the case of which:
- the first valve (31) is a normally closed electromagnetic bypass valve, and/or
- the second valve (31) is a normally open electromagnetic inlet valve.

7. Brake system (100) according to one of the preceding claims,
- with a control unit (10) which is set up to control the valve arrangement (30) in a manner which is dependent on a state of the vehicle (1), and, in particular, to cause the first valve (31) and/or the second valve (32) to assume the respective first or second state,
- in order, in particular, to reduce blocking, excessive retardation, insufficient retardation and/or skidding of one or more wheels (9-1, 9-2) of the vehicle (1) and/or to prevent a rollover of the vehicle (1).

8. Brake system (100) according to Claim 7,
- with a sensor arrangement (50) in conjunction with the control unit (10) with at least one sensor (51, 52) for the detection of values of a speed, acceleration and/or tilt of the vehicle (1), a pressure of the brake fluid and/or the rotational speed of one or more wheels (9-1, 9-2) of the vehicle (1),
- the control unit (10) being configured to receive detected values of the at least one sensor (51, 52) and to determine therefrom a state of the vehicle (1) for the control of the valve arrangement (30).

9. Method for operating a brake system (100) of a vehicle (1) according to one of Claims 1 to 8,
in the case of which method, in a manner which is controlled depending on a state of the vehicle (1), a low pressure chamber (21) and a high pressure chamber (22) of a brake booster (20) of the brake system (100) are connected to one another in a fluid-mechanical manner or are disconnected from one another in a fluid-mechanical manner.

10. Vehicle (1) which can be driven by way of muscle power and/or motor power, in particular of an electric bicycle, e-bike, pedelec or the like,
with:
- at least one wheel (9-1, 9-2), and
- with a brake system (100) according to one of Claims 1 to 8,
the brake booster (20) and/or the valve arrangement (30) being configured on or in a brake calliper (63) or as part of a brake calliper (63), and
the brake system (100) being configured for the controlled braking of the at least one wheel (9-1, 9-2) .

## Revendications

1. Système de freinage (100) d'un véhicule (1) pouvant être entraîné par une force musculaire et/ou par une force de moteur, en particulier d'un vélo électrique, d'un vélo à assistance électrique, d'un pédélec ou similaire,
comportant :
- un servofrein (20) et
- un ensemble de soupapes (30),
dans lequel :
- le servofrein (20) est réalisé pour être soumis à l'action d'un fluide de frein et comprend une chambre basse pression (21) côté entrée et une chambre haute pression (22) côté sortie et
- la chambre basse pression (21) et la chambre haute pression (22) peuvent être reliées de manière fluidiquement mécanique et commandable au moyen de l'ensemble de soupapes (30),
**caractérisé en ce que**
le servofrein (20) et/ou l'ensemble de soupapes (30) sont réalisés sur ou dans un étrier de frein (63) ou en tant que partie d'un étrier de frein (63).

2. Système de freinage (100) selon la revendication 1, dans lequel :
- l'ensemble de soupapes (30) comprend une première soupape (31),
- la première soupape (31) peut être mise de manière commandable au moins dans un premier état et dans un deuxième état,
- dans le premier état de la première soupape (31), la chambre basse pression (21) et la chambre haute pression (22) sont séparées l'une de l'autre de manière fluidiquement mécanique et
- dans le deuxième état de la première soupape (31), la chambre basse pression (21) et la chambre haute pression (22) sont reliées l'une à l'autre de manière fluidiquement mécanique.

3. Système de freinage (100) selon la revendication 2, comportant une conduite de dérivation (40),
- laquelle comprend une première extrémité (41) en liaison fluidiquement mécanique avec la chambre basse pression (21) et une deuxième extrémité (42) en liaison fluidiquement mécanique avec la chambre haute pression (22) et
- dans laquelle la première soupape (31) est disposée en particulier entre la première et la deuxième extrémité (41, 42) .

4. Système de freinage (100) selon l'une des revendications précédentes,
dans lequel :
- l'ensemble de soupapes (30) comprend une deuxième soupape (32),
- la deuxième soupape (32) peut être mise de manière commandable au moins dans un premier état et dans un deuxième état,
- dans le premier état de la deuxième soupape (32), la chambre basse pression (21) est reliée de manière fluidiquement mécanique à un réservoir (61-2) de fluide de frein et
- dans le deuxième état de la deuxième soupape (32), la chambre basse pression (21) est séparée de manière fluidiquement mécanique du réservoir (61-2) de fluide de frein.

5. Système de freinage (100) selon l'une des revendications précédentes,
dans lequel la deuxième soupape (32) est disposée en amont par rapport à un raccordement fluidiquement mécanique de la première soupape (31) à la chambre basse pression (21).

6. Système de freinage (100) selon l'une des revendications précédentes,
dans lequel :
- la première soupape (31) est une soupape de dérivation électromagnétique fermée sans courant et/ou
- la première soupape (31) est une soupape d'entrée électromagnétique ouverte sans courant.

7. Système de freinage (100) selon l'une des revendications précédentes,
- comportant une unité de commande (10), laquelle est conçue pour commander l'ensemble de soupapes (30) en fonction d'un état du véhicule (1) et en particulier pour amener la première soupape (31) et/ou la deuxième soupape (32) à adopter le premier ou deuxième état respectif,
- en particulier pour diminuer un blocage, une décélération excessive, une décélération trop faible et/ou un patinage d'une ou plusieurs roues (9-1, 9-2) du véhicule (1) et/ou pour supprimer un renversement du véhicule (1).

8. Système de freinage (100) selon la revendication 7,
- comportant un ensemble de capteurs (50) en liaison avec l'unité de commande (10) et comportant au moins un capteur (51, 52) servant à acquérir des valeurs d'une vitesse, d'une accélération et/ou d'une inclinaison du véhicule (1), d'une pression du fluide de frein et/ou de la vitesse de rotation d'une ou plusieurs roues (9-1, 9-2) du véhicule (1),
- l'unité de commande (10) étant réalisée pour recevoir des valeurs acquises de l'au moins un capteur (51, 52) et pour déterminer à partir de celles-ci un état du véhicule (1) pour la commande de l'ensemble de soupapes (30).

9. Procédé permettant de faire fonctionner un système de freinage (100) d'un véhicule (1) selon l'une des revendications 1 à 8,
dans lequel, de manière commandée en fonction d'un état du véhicule (1), une chambre basse pression (21) et une chambre haute pression (22) d'un servofrein (20) du système de freinage (100) sont reliées l'une à l'autre de manière fluidiquement mécanique ou sont séparées l'une de l'autre de manière fluidiquement mécanique.

10. Véhicule (1) pouvant être entraîné par une force musculaire et/ou par une force de moteur, en particulier vélo électrique, vélo à assistance électrique, pédélec ou similaire, comportant :
- au moins une roue (9-1, 9-2) et
- comportant un système de freinage (100) selon l'une des revendications 1 à 8, dans lequel le servofrein (20) et/ou l'ensemble de soupapes (30) sont réalisés sur ou dans un étrier de frein (63) ou en tant que partie d'un étrier de frein (63) et
dans lequel le système de freinage (100) est réalisé pour le freinage commandé de l'au moins une roue (9-1, 9-2).
